# EUROPEAN PATENT SPECIFICATION

(11) **EP 1 548 349 B1**
(45) Date of publication and mention of the grant of the patent: **11.05.2011**
(21) Application number: 04029875.4
(22) Date of filing: 16.12.2004
(51) Int. Cl.: F16L 41/08, F16L 27/047

(54) **Coupling for connecting a secondary duct to a main duct**
Kupplung zum Verbinden eines Abzweigrohres mit einem Hauptrohr
Dispositif pour raccorder une canalisation de dérivation sur une conduite principale

(30) Priority: 23.12.2003 IT BO20030777
(43) Date of publication of application: 29.06.2005
(73) Proprietor: REDI S.p.A., Zola Predosa (Bologna) (IT)
(72) Inventor: Cioni, Moreno, 40033 Casalecchio Di Reno (IT)
(74) Representative: Modiano, Micaela Nadia

(56) References cited:
- EP-A- 0 645 575
- EP-A- 0 893 642
- EP-A- 0 930 455
- DE-A1- 10 158 983
- DE-U- 29 800 496
- GB-A- 983 352
- US-A- 3 827 448
- US-A- 5 257 739
- US-A- 5 507 536

## Description

The present invention relates to a coupling for connecting a secondary duct to a main duct.

Main sewer ducts are usually provided by means of reinforced-concrete tubular elements, which are inserted in each other and are intended to convey the wastewater toward purification plants or appropriately provided waterworks for dispersion.

The main sewer ducts constitute a manifold for all the drain piping of the buildings that stand in the area. When the main sewer duct is created, all the secondary pipes are connected to it (during construction).

During the operation of the sewer duct, it may be necessary to connect new secondary pipes (for example following the erection of new buildings or due to an expansion of the sewer system of existing buildings).

These connections are generally obtained by means of couplings made of a material such as plastics, which are locked firmly in a hole provided in the surface of the main duct (by screw coupling or by arranging layers of structural material adapted to bond the coupling and the duct). The secondary pipe is fixed to the opposite end of the coupling.

In view of the possibility of movements of the soil caused by the subsidence of water tables or clayey soils, secondary pipes must be installed so that they can perform small settling movements. If this were not done, such pipes might break after short periods of operation.

Installing secondary pipes on main ducts that are already operating is a complicated operation, both due to the conditions in which the workers must work and due to the characteristics of conventional couplings, which entail obligatory methods that are often difficult to perform in awkward positions.

Examples of duct coupling are available from documents EP-A-0 645 575, DE-A-10158983 and EP-A-0 930 455.

EP-A-0 645 575 shows a coupling according to the preamble of claim 1.

The aim of the present invention is to obviate the above-cited drawbacks and meet the mentioned requirements, by providing a coupling for connecting a secondary duct to a main duct that is simple to install and is suitable to safely allow small movements of the secondary duct.

Within this aim, an object of the present invention is to provide a coupling that is simple, relatively easy to provide in practice, safe in use, effective in operation and has a relatively low cost.

This aim and this and other objects that will become better apparent hereinafter are achieved by a coupling for connecting a secondary duct to a main duct according to the invention, that has the features set forth in claim 1.

A method of installing the coupling, according to the invention, is carried out by the steps forth in claim 13.

Further characteristics and advantages of the present invention will become better apparent from the following detailed description of a preferred but not exclusive embodiment of a coupling for connecting a secondary duct to a main duct, which is illustrated by way of non-limiting example in the accompanying drawings, wherein:

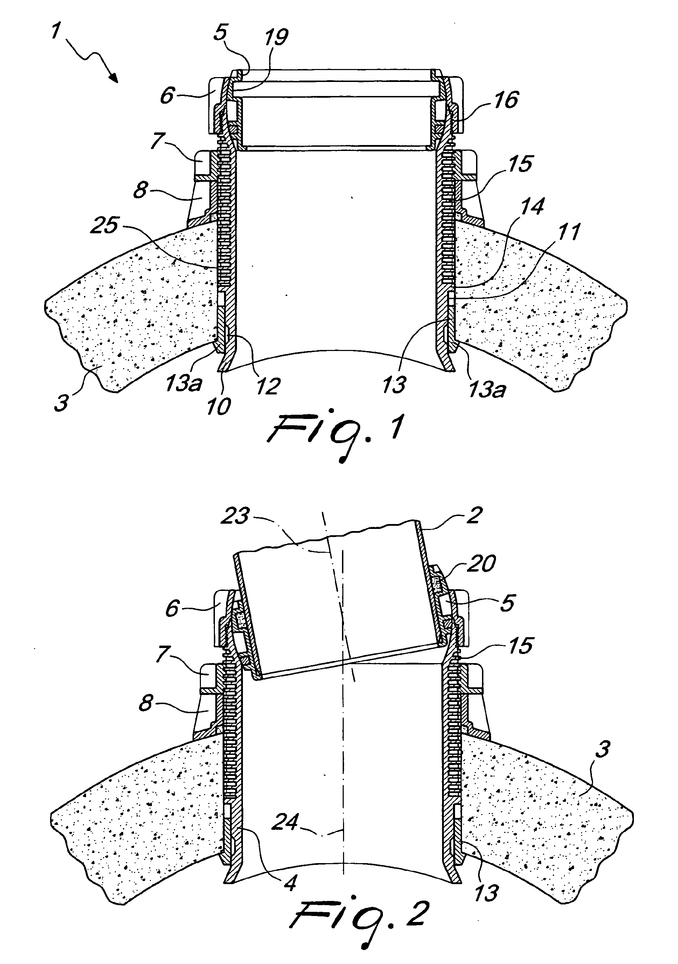

Figure 1 is a sectional view, taken along a diametrical plane, of a coupling according to the invention, installed on a main duct;
Figure 2 is a sectional view, taken along a diametrical plane, of a coupling according to the invention, installed on a main duct, with the secondary duct in an inclined position;

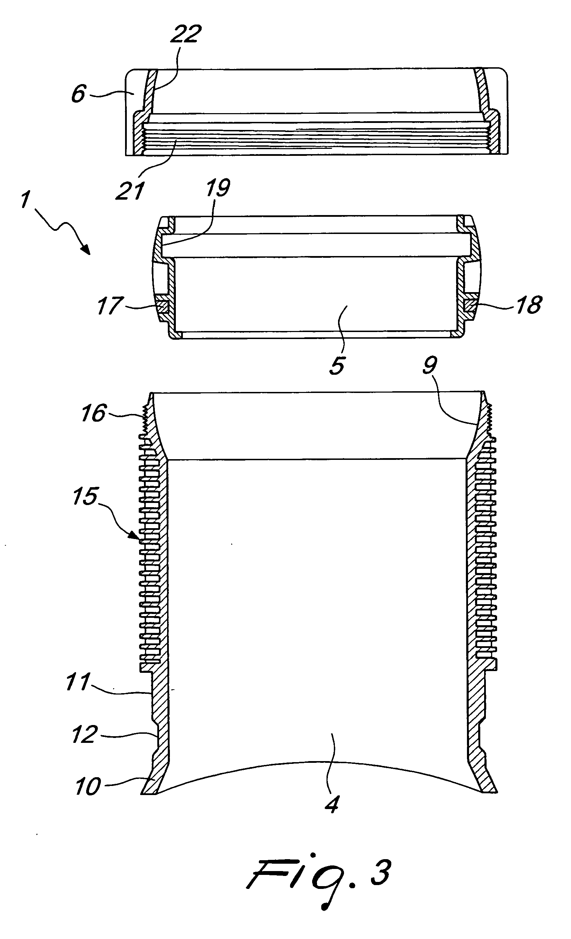

Figure 3 is an exploded sectional view of a coupling according to the invention, taken along a diametrical plane;

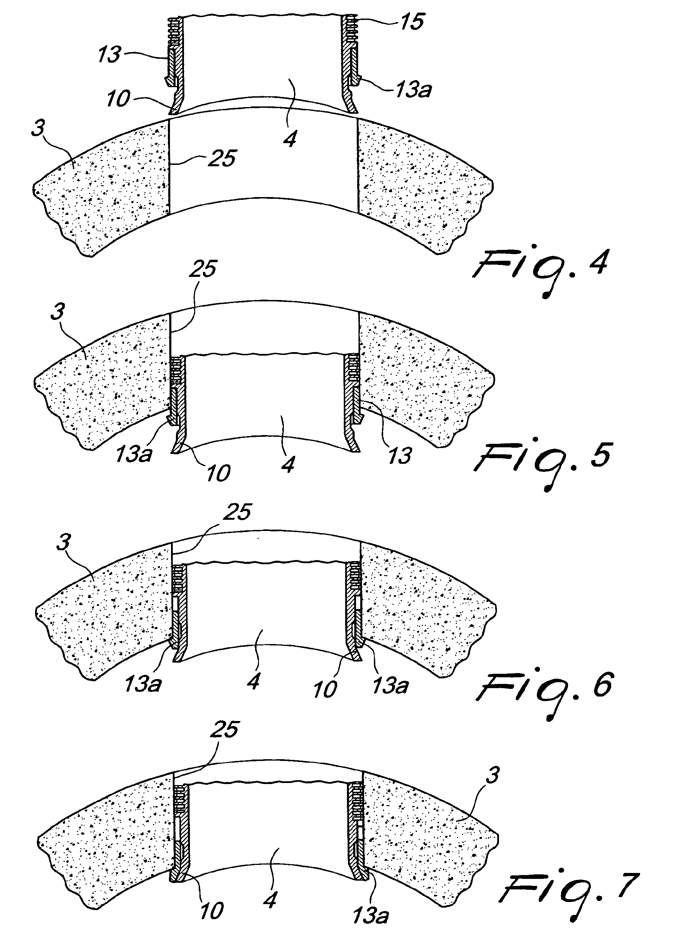

Figure 4 is a sectional view, taken along a diametrical plane, of a coupling according to the invention which faces a hole of a main duct;
Figure 5 is a sectional view, taken along a diametrical plane, of a coupling according to the invention, fully inserted in a hole of a main duct;
Figure 6 is a sectional view, taken along a diametrical plane, of a coupling according to the invention, partially extracted from a hole of a main duct;
Figure 7 is a sectional view, taken along a diametrical plane, of a coupling according to the invention, installed in a main duct.

With reference to the figures, the reference numeral 1 generally designates a coupling for connecting a secondary duct 2 to a main duct 3.

The coupling 1 is constituted by a tubular element 4, an annular element 5, a bush 6, a ring 7 and a spacer 8.

The tubular element 4 has, at its upper end, an internal receptacle 9 that is shaped like a spherical portion, and therefore its upper opening has a larger diameter than the internal cavity of the element 4. The lower end of the element 4 has a frustum-shaped end sector 10, which has a larger outside diameter (which corresponds to the last cross-section of the element 4) that is equal to the maximum outside diameter of the element 4 and a minimum outside diameter that is equal to the diameter of a non-threaded cylindrical region 11 that covers almost all of the lower half of the element 4.

A groove 12 is formed at the region where the sector 10 and the region 11 blend. A sealing bushing 13 is fitted so that it can move axially in the region 11 and is delimited between the sector 10 and a stroke limiting ridge 14 provided at the end of the region 11. The sealing bushing 13 is provided with a frustum-shaped end region, whose terminal outside diameter is equal to the outside diameter of the remaining part of the bushing 13 and a larger maximum outside diameter at a region above the terminal region. An abutment border 13a is thus formed in the end region of the bushing 13.

Externally, the element 4 has a first thread 15 with a wide pitch in its central region and a second thread 16 with a denser pitch in its upper portion.

The annular element 5 has an outer surface that is complementary to the receptacle 9 of the element 4: the height of the annular element 5 is substantially twice the height of the receptacle 9, its outer surface is symmetrical with respect to a central plane, and each half has exactly the same shape as the receptacle 9.

A slot 17 is provided on the outer surface of the ring and accommodates a gasket 18 made of a material such as rubber.

The annular element 5 has an inside diameter that is similar to the outside diameter of the secondary duct 2; a notch 19 is provided on its internal surface and is adapted to accommodate a sealing element 20, in which the surface that lies opposite the surface inserted within the notch 19 rests on the secondary duct 2.

The bush 6 is a threaded closure element of the receptacle 9: it is in fact provided externally with a shape that is suitable for rotary actuation (in order to allow screwing) by means of an appropriately provided wrench. It is provided internally with a thread 21, which after assembly is engaged in the second thread 16 of the tubular element 4. A complementary receptacle 22 is provided above the thread 21 and is mirror-symmetrical with respect to the receptacle 9: when the bush 6 is screwed onto the tubular element 4, the receptacle 9 and the complementary receptacle 22 face each other, constituting a spherical chamber for accommodating the ring 6. An axis 23 of the ring 5, once inserted in the chamber formed by the receptacle 9 and the complementary receptacle 22, can be orientated at will with respect to the axis 24 of the tubular element 4, forming an angle therewith that is not larger than a preset limit (determined by the dimensions of the elements involved) and is generally on the order of 10°.

The spacer 8 and the ring 7 are fitted along the tubular element 4 before fixing the secondary duct 2 by means of the ring 5 and the bush 6. The spacer 8 is simply fitted over the element 4 and its lower surface (which is appropriately shaped) rests on the main duct 3. The ring 7 is screwed onto the first thread 15 and its lower surface rests on the upper surface of the spacer 8: by tightening the ring 7, the coupling 1 is locked on the main duct 3.

Operation of the coupling of the invention is as follows: to install the coupling 1, it is necessary to provide a hole 25 whose diameter is slightly larger than the outside diameter of the tubular element 4. The tubular element 4 must be inserted within the hole 25 so that the abutment frame 13a of the sealing bushing 13 protrudes into the main duct 3. During insertion, the bushing 13 rises along the cylindrical region 11 until it rests on the stroke limiting ridge 14, while the frame 13a remains accommodated within the groove 12 following a slight deformation of the bushing 13 until the entire frame 13a moves beyond the internal wall of the duct 3; it is therefore necessary to insert the element 4 deeply into the hole 25 in order to ensure the exit of the frame 13 a.

By retracting the element 4 from the hole 25, the bushing 13 remains locked on the internal surface of the hole 25 due to the abutment frame 13a.

The spacer 8 must be arranged along the element 4 and the ring 7 must be tightened onto the first thread 15 (screwing of the ring 7 must be forced until the frame 13a is compressed between the rim of the hole 25 and the frustum-shaped sector 10).

The end of the secondary duct 2 can then be inserted and locked within the ring 5, which can then be arranged within the receptacle 9 and be locked therein by screwing the bush 6, arranged beforehand on the secondary duct 2, on the second thread 16.

Once the coupling 1 has been assembled, it is convenient to inject, through appropriately provided openings of the spacer 8, a solidifying liquid substance between the hole 25 and the tubular element 4, adapted to protect the surface of the hole 25 from infiltrations of various liquids. In providing the hole, the reinforcement rods of the main duct 3 may in fact be exposed and may rust if placed in contact with water, damaging the duct 3.

It has thus been shown that the invention achieves the proposed aim and object.

The invention thus conceived is susceptible of numerous modifications and variations, for instance, the details may be replaced with other technically equivalent ones, or the materials used, as well as the shapes and dimensions, may be any according to requirements, as long as they are within the scope of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A coupling for connecting a secondary duct (2) to a main duct (3), comprising: a tubular element (4) having a first external thread (15) and an end, non-threaded cylindrical region (11) that blends with a terminal frustum-shaped sector (10) having an outside larger diameter that is equal to the maximum outside diameter of the tubular element (4), said end region (11) and said frustum shaped sector (10) being insertable in a hole (25) formed in the wall of the main duct (3) which has a diameter that is slightly larger than the diameter of said tubular element (4); at least one ring (7) that can be screwed onto said first external thread (15) of said tubular element (4); and a sealing bushing (13) that is mountable on, and is suitable to perform a translational motion axially over said end region (11) of said tubular element (4) between said first external thread (15) and said frustum-shaped sector (10), said sealing bushing (13) having an end that is frustum-shaped, starting from a minimum diameter that is not larger than the diameter of said hole (25) to a maximum diameter that is larger than the outside diameter of the remaining part of said bushing (13), in order to constitute an abutment frame (13a), **characterized in that** said tubular element (4) is provided, at a region thereof where said end region (11) and said terminal frustum-shaped sector (10) blend, with a groove (12) adapted to accommodate therein said abutment frame (13a) following to a deformation of the bushing (13) such as to allow movement of the frame (13a) beyond the internal wall of said main duct (3) during insertion of the coupling in said hole (25), said tubular element (4) having at the end opposite said end region (11) a receptacle (9) shaped as a spherical portion and a second outside thread (16), and **in that** it further comprises: an annular element (5) with an external surface that is shaped complementarily to said receptacle (9) of said tubular element (4) and is suitable for insertion within said receptacle (9); and a bush (6) with an internal surface that constitutes a complementary receptacle (22) which is the ideal continuation of the generating sphere of said receptacle (9) and is screwed onto said second thread (16) for locking said annular element (5) in said receptacle (9).

2. The coupling according to claim 1, **characterized in that** said annular element (5) has a secondary duct (2) fitted hermetically thereon.

3. The coupling according to claims 1 and 2, **characterized in that** said annular element (5) is movable within said receptacle (9) and said complementary receptacle (22), which are mutually couplet.

4. The coupling according to claim 3, **characterized** the axis (23) of said annular element (5) can be inclined by virtue of the movement of said annular element, with respect to the axis (24) of said tubular element (4), by an angle at the most equal to 20° in all directions.

5. The coupling according to claim 4, **characterized in that** a maximum inclination angle is of 10°.

6. The coupling according to claims 1 and 2, **characterized in that** said annular element (5) has a perimetric slot (17), with a sealing gasket (18) accommodated therein, the protruding end of which slides on the surface of said receptacle (9) and of said complementary receptacle (22) when the annular element (5) is fitted inside said receptacle (9).

7. The coupling according to claim 6, **characterized in that** said sealing gasket (18) is made of a material such as rubber.

8. The coupling according to any of claims 1 to 7, **characterized in that** said sealing bushing (13) is made of a deformable material such as robber.

9. The coupling according to any of the preceding claims, **characterized in that** it comprises a spacer (8) that is interposed between said main duct (3) and said ring (7) on said tubular element (4).

10. The coupling according to claim 1, **characterized in that** said first thread (15) ends with a ridge (14), which is adapted to constitute a stroke limiter for said bushing (13).

11. The coupling according to any of the preceding claims, **characterized in that** said first thread (15) and said second thread (16) are identical and are constituted by a single start that runs along the outer surface of said tubular element (4) without discontinuities.

12. The coupling according to any of the preceding claims, **characterized in that** said sealing bushing (13) is suitable to be extracted by hand from said tubular element (4), by inserting a hand through said element (4) and pulling drown said bushing (13) and thus allowing complete extraction of the coupling (1) from said hole (25).

13. A method for installing a coupling having the features set forth in claims 1-12, which comprises the steps of: providing a hole (25) in the main duct whose diameter is slightly larger than the outside maximum diameter of the tubular element (4); inserting the tubular element (4) with the sealing bushing (13) on the end region (11) within said hole (25), the sealing bushing deforming so that the abutment frame (13a) thereof remains accommodated in the groove (12) and moves beyond the wall of the main duct (3) in which the hole (25) is made to protrude inside the main duct (3); arranging the spacer (8) and the ring (7) on said first thread (15); screwing the ring (7) until the frame (13a) is compressed between the rim of the hole (25) and the frustum-shaped sector (10); inserting and locking the end of the secondary duct (2) in said annular element (5), arranging the annular element (5) within the receptacle (9), and screwing the bush (6), arranged beforehand on the secondary duct (2), on the second thread (16).

14. The method according to claim 13, **characterized in that** it further comprises the step of injecting, when the tubular element (4) is inserted in said hole (25) and before arranging said spacer (8) and tightening said ring (7), a solidifying liquid substance adapted to protect the surface of said hole (25) from infiltrations of various liquids between said hole (25) and said tubular element (4).

15. The method according to claim 13, **characterized in that** it further comprises the step of injecting a solidifying liquid substance adapted to protect the surface of said hole (25) from infiltrations of various liquids, when the tubular element (4) is inserted in said hole (25) and once said spacer (8) has been arranged and said ring (7) has been tightened, between said hole (25) and said tubular element (4) through a respective opening of said spacer (8).

## Patentansprüche

1. Eine Kupplung zum Verbinden eines Abzweigrohres (2) mit einem Hauptrohr (3), die Folgendes umfasst:
ein rohrförmiges Element (4) mit einem ersten Außengewinde (15) und einem zylindrischen Endbereich (11) ohne Gewinde, das in einen abschließenden, kegelstumpfförmigen Abschnitt (10) übergeht, der einen größeren Außendurchmesser hat, welcher gleich dem maximalen Außendurchmesser des rohrförmigen Elements (4) ist, wobei der Endbereich (11) und der kegelstumpfförmige Abschnitt (10) in ein Loch (25) eingefügt werden können, das in der Wand des Hauptrohrs (3) geformt ist und einen Durchmesser hat, der etwas größer ist als der Durchmesser des rohrförmigen Elements (4);
mindestens einen Ring (7), der auf das erste Außengewinde (15) des rohrförmigen Elements (4) aufgeschraubt werden kann; und
eine Abdichtbuchse (13), die auf den Endbereich (11) des rohrförmigen Elements (4) zwischen dem ersten Außengewinde (15) und dem kegelstumpfförmigen Abschnitt (10) montiert werden kann und geeignet ist, eine Translationsbewegung axial über diesen Endbereich (11) auszuführen, wobei die Abdichtbuchse (13) ein Ende hat, das kegelstumpfförmig ist, ausgehend von einem Mindestdurchmesser, der nicht größer ist als der Durchmesser des Lochs (25), bis zu einem maximalen Durchmesser, der größer ist als der Außendurchmesser des restlichen Teils der Buchse (13), um einen Widerlagerrahmen (13a) zu bilden,
**dadurch gekennzeichnet, dass** das rohrförmige Element (4), in einem Bereich davon, wo der Endbereich (11) und der abschließende, kegelstumpfförmige Abschnitt (10) ineinander übergehen, mit einer Rille (12) versehen ist, ausgebildet, um darin nach einer Verformung der Buchse (13) den Widerlagerrahmen (13a) aufzunehmen, um so die Bewegung des Rahmens (13a) über die Innenwand des Hauptrohrs (3) hinaus während des Einsetzens der Kupplung in das Loch (25) zu ermöglichen, wobei das rohrförmige Element (4) am Ende gegenüber dem Endbereich (11) einen Behälter (9) hat, der als kugelförmiger Abschnitt geformt ist, und ein zweites Außengewinde (16), und
dadurch, dass sie weiter Folgendes umfasst: ein ringförmiges Element (5) mit einer äußeren Oberfläche, die komplementär zu dem Behälter (9) des rohrförmigen Elements (4) geformt und zum Einführen in den Behälter (9) geeignet ist; und
eine Buchse (6) mit einer inneren Oberfläche, die einen komplementären Behälter (22) bildet, welcher die ideale Fortsetzung der den Behälter (9) erzeugenden Kugel ist und zum Verriegeln des ringförmigen Elements (5) in dem Behälter (9) auf das zweite Gewinde (16) aufgeschraubt wird.

2. Die Kupplung gemäß Anspruch 1, **dadurch gekennzeichnet, dass** das ringförmige Element (5) ein Abzweigrohr (2) hat, das hermetisch darauf aufgesetzt ist.

3. Die Kupplung gemäß den Ansprüchen 1 und 2, **dadurch gekennzeichnet, dass** das ringförmige Element (5) innerhalb des Behälters (9) und des komplementären Behälters (22), die miteinander gekoppelt sind, beweglich ist.

4. Die Kupplung gemäß Anspruch 3, **dadurch gekennzeichnet, dass** die Achse (23) des ringförmigen Elements (5) durch die Bewegung des ringförmigen Elements im Verhältnis zur Achse (24) des rohrförmigen Elements (4) in einem Winkel geneigt sein kann, der höchstens 20° in alle Richtungen beträgt.

5. Die Kupplung gemäß Anspruch 4, **dadurch gekennzeichnet, dass** ein maximaler Neigungswinkel 10° beträgt.

6. Die Kupplung gemäß Anspruch 1 und 2, **dadurch gekennzeichnet, dass** das ringförmige Element (5) einen perimetrischen Schlitz (17) hat, mit einem Dichtring (18), der darin untergebracht ist und dessen herausragendes Ende auf der Oberfläche des Behälters (9) und des komplementären Behälters (22) gleitet, wenn das ringförmige Element (5) in den Behälter (9) eingesetzt wird.

7. Die Kupplung gemäß Anspruch 6, **dadurch gekennzeichnet, dass** der Dichtring (18) aus einem Material wie zum Beispiel Gummi besteht.

8. Die Kupplung gemäß einem beliebigen der Ansprüche 1 bis 7, **dadurch gekennzeichnet, dass** die Abdichtbuchse (13) aus einem verformbaren Material, wie zum Beispiel Gummi, besteht.

9. Die Kupplung gemäß einem beliebigen der obigen Ansprüche, **dadurch gekennzeichnet, dass** sie ein Abstandsstück (8) umfasst, das zwischen dem Hauptrohr (3) und dem Ring (7) auf dem rohrförmigen Element (4) angeordnet ist.

10. Die Kupplung gemäß Anspruch 1, **dadurch gekennzeichnet, dass** das erste Gewinde (15) in einem Grat (14) endet, der ausgebildet ist, um einen Hubbegrenzer für die Buchse (13) zu bilden.

11. Die Kupplung gemäß einem beliebigen der obigen Ansprüche, **dadurch gekennzeichnet, dass** das erste Gewinde (15) und das zweite Gewinde (16) identisch sind und von einem einzigen Start gebildet werden, der ohne Unterbrechungen entlang der äußeren Oberfläche des rohrförmigen Elements (4) verläuft.

12. Die Kupplung gemäß einem beliebigen der obigen Ansprüche, **dadurch gekennzeichnet, dass** die Abdichtbuchse (13) geeignet ist, manuell aus dem rohrförmigen Element (4) herausgezogen zu werden, indem eine Hand durch das Element (4) eingeführt und die Buchse (13) heruntergezogen und so eine vollständige Extraktion der Kupplung (1) aus dem Loch (25) ermöglicht wird.

13. Ein Verfahren zur Installation einer Kupplung, das die in den Ansprüchen 1-12 aufgeführten Merkmale hat und folgende Schritte umfasst:
Bereitstellung eines Lochs (25) im Hauptrohr, dessen Durchmesser etwas größer ist als der maximale Außendurchmesser des rohrförmigen Elements (4);
Einführen des rohrförmigen Elements (4) mit der Abdichtbuchse (13) am Endabschnitt (11) in das Loch (25), wobei sich die Abdichtbuchse so verformt, dass der Widerlagerrahmen (13a) davon in die Rille (12) aufgenommen bleibt und sich über die Wand des Hauptrohrs (3), in dem das Loch (25) geformt ist, hinaus bewegt, um in das Hauptrohr (3) hineinzuragen;
Anordnung des Abstandsstücks (8) und des Rings (7) an dem ersten Gewinde (15) ;
Schrauben des Rings (7), bis der Rahmen (13a) zwischen dem Rand des Lochs (25) und dem kegelstumpfförmigen Abschnitt (10) zusammengedrückt wird;
Einführen und Verriegeln des Endes des Abzweigrohrs (2) in dem ringförmigen Element (5), Anordnung des ringförmigen Elements (5) im Behälter (9) und Aufschrauben der Buchse (6), die zuvor auf dem Abzweigrohr (2) angebracht wurde, auf das zweite Gewinde (16).

14. Das Verfahren gemäß Anspruch 13, **dadurch gekennzeichnet**, das es weiter folgenden Schritt umfasst: Injizieren, wenn das rohrförmige Element (4) in das Loch (25) eingesetzt ist und bevor das Abstandsstück (8) angebracht und der Ring (7) festgezogen wurde, einer verfestigenden flüssigen Substanz, die geeignet ist, die Oberfläche des Lochs (25) vor dem Eindringen verschiedener Flüssigkeiten zwischen das Loch (25) und das rohrförmige Element (4) zu schützen.

15. Das Verfahren gemäß Anspruch 13, **dadurch gekennzeichnet, dass** es weiter folgenden Schritt umfasst: Injizieren einer verfestigenden flüssigen Substanz, die geeignet ist, die Oberfläche des Lochs (25) vor dem Eindringen verschiedener Flüssigkeiten zu schützen, wenn das rohrförmige Element (4) in das Loch (25) eingesetzt ist und sobald das Abstandsstück (8) angebracht und der Ring (7) festgezogen wurde, zwischen das Loch (25) und das rohrförmige Element (4) durch eine entsprechende Öffnung des Abstandsstücks (8).

## Revendications

1. Raccord pour raccorder un conduit secondaire (2) à un conduit principal (3), comprenant :
un élément tubulaire (4) ayant un premier filetage externe (15) et une région d'extrémité cylindrique non filetée (11) qui se prolonge par un tronçon terminal de forme tronconique (10) ayant un plus grand diamètre externe qui est égal au diamètre externe maximum de l'élément tubulaire (4), ladite région d'extrémité (11) et ledit tronçon de forme tronconique (10) pouvant être insérés dans un trou (25) formé dans la paroi du conduit principal (3) qui a un diamètre qui est légèrement plus grand que le diamètre dudit élément tubulaire (4) ; au moins une bague (7) qui peut être vissée sur ledit premier filetage externe (15) dudit élément tubulaire (4) ; et un manchon d'étanchéité (13) qui peut être monté sur, et est approprié pour réaliser un mouvement de translation axialement sur ladite région d'extrémité (11) dudit élément tubulaire (4) entre ledit premier filetage externe (15) et ledit tronçon de forme tronconique (10), ledit manchon d'étanchéité (13) ayant une extrémité qui est de forme tronconique, à partir d'un diamètre minimum qui n'est pas plus grand que le diamètre dudit trou (25) jusqu'à un diamètre maximum qui est plus grand que le diamètre externe de la partie restante dudit manchon (13), afin de constituer une structure de butée (13a), **caractérisé en ce que** ledit élément tubulaire (4) comporte dans sa région où ladite région d'extrémité (11) et ledit tronçon terminal de forme tronconique (10) se raccordent, une gorge (12) adaptée pour recevoir à l'intérieur ladite structure de butée (13a) suite à une déformation du manchon (13) afin de permettre le mouvement de la structure (13a) au-delà de la paroi interne dudit conduit principal (3) pendant l'insertion du raccord dans ledit trou (25), ledit élément tubulaire (4) ayant à l'extrémité opposée à ladite région d'extrémité (11), un réceptacle (9) formé comme une partie sphérique et un deuxième filetage externe (16), et **en ce qu'**il comprend en outre : un élément annulaire (5) avec une surface externe qui est formée de manière complémentaire par rapport audit réceptacle (9) dudit élément tubulaire (4) et est appropriée pour l'insertion à l'intérieur dudit réceptacle (9) ; et un manchon (6) avec une surface interne qui constitue un réceptacle complémentaire (22) qui est la continuité idéale de la sphère de génération dudit réceptacle (9) et est vissé sur ledit deuxième filetage (16) pour bloquer ledit élément annulaire (5) dans ledit réceptacle (9).

2. Raccord selon la revendication 1, **caractérisé en ce que** ledit élément annulaire (5) a un conduit secondaire (2) hermétiquement monté sur ce dernier.

3. Raccord selon les revendications 1 et 2, **caractérisé en ce que** ledit élément annulaire (5) est mobile à l'intérieur dudit réceptacle (9) et dudit réceptacle complémentaire (22), qui sont mutuellement raccordés.

4. Raccord selon la revendication 3, **caractérisé en ce que** l'axe (23) dudit élément annulaire (5) peut être incliné par suite du mouvement dudit élément annulaire, par rapport à l'axe (24) dudit élément tubulaire (4), selon un angle au maximum égal à 20° dans toutes les directions.

5. Raccord selon la revendication 4, **caractérisé en ce qu'**un angle d'inclinaison maximum est de 10°.

6. Raccord selon les revendications 1 et 2, **caractérisé en ce que** ledit élément annulaire (5) a une fente périmétrale (17), avec un joint d'étanchéité (18) logé à l'intérieur de cette dernière, dont l'extrémité en saillie coulisse sur la surface dudit réceptacle (9) et dudit réceptacle complémentaire (22) lorsque l'élément annulaire (5) est monté à l'intérieur dudit réceptacle (9).

7. Raccord selon la revendication 6, **caractérisé en ce que** ledit joint d'étanchéité (18) est réalisé en un matériau tel que le caoutchouc.

8. Raccord selon l'une quelconque des revendications 1 à 7, **caractérisé en ce que** ledit manchon d'étanchéité (13) est réalisé en un matériau déformable tel que le caoutchouc.

9. Raccord selon l'une quelconque des revendications précédentes, **caractérisé en ce qu'**il comprend un dispositif d'espacement (8) qui est intercalé entre ledit conduit principal (3) et ladite bague (7) sur ledit élément tubulaire (4).

10. Raccord selon la revendication 1, **caractérisé en ce que** ledit premier filetage (15) se termine par une crête (14) qui est adaptée pour constituer une butée de fin de course pour ledit manchon (13).

11. Raccord selon l'une quelconque des revendications précédentes, **caractérisé en ce que** ledit premier filetage (15) et ledit deuxième filetage (16) sont identiques et sont constitués par un seul départ qui s'étend le long de la surface externe dudit élément tubulaire (4) sans interruption.

12. Raccord selon l'une quelconque des revendications précédentes, **caractérisé en ce que** ledit manchon d'étanchéité (13) est approprié pour être extrait à la main dudit élément tubulaire (4), en insérant une main à travers ledit élément (4) et en tirant ledit manchon (13) vers le bas et permettant ainsi l'extraction complète du raccord (1) dudit trou (25).

13. Procédé pour installer un raccord ayant les caractéristiques présentées dans les revendications 1 à 12, qui comprend les étapes consistant à : prévoir un trou (25) dans le conduit principal dont le diamètre est légèrement plus grand que le diamètre maximum externe de l'élément tubulaire (4) ; insérer l'élément tubulaire (4) avec le manchon d'étanchéité (13) sur la région d'extrémité (11) à l'intérieur dudit trou (25), le manchon d'étanchéité se déformant de sorte que sa structure de butée (13a) reste logée dans la gorge (12) et se déplace au-delà de la paroi du conduit principal (3) dans lequel le trou (25) est fait pour faire saillie à l'intérieur du conduit principal (3) ; agencer le dispositif d'espacement (8) et la bague (7) sur ledit premier filetage (15) ; visser la bague (7) jusqu'à ce que la structure (13a) soit comprimée entre le bord du trou (25) et le tronçon de forme tronconique (10) ; insérer et bloquer l'extrémité du conduit secondaire (2) dans ledit élément annulaire (5), agencer l'élément annulaire (5) à l'intérieur du réceptacle (9), et visser le manchon (6), agencé au préalable sur le conduit secondaire (2), sur le deuxième filetage (16).

14. Procédé selon la revendication 13, **caractérisé en ce qu'**il comprend en outre l'étape consistant à injecter, lorsque l'élément tubulaire (4) est inséré dans ledit trou (25) et avant d'agencer ledit dispositif d'espacement (8) et de serrer ladite bague (7), une substance liquide de solidification adaptée pour protéger la surface dudit trou (25) contre les infiltrations de différents liquides entre ledit trou (25) et ledit élément tubulaire (4).

15. Procédé selon la revendication 13, **caractérisé en ce qu'**il comprend en outre l'étape consistant à injecter une substance liquide de solidification adaptée pour protéger la surface dudit trou (25) contre les infiltrations de différents liquides, lorsque l'élément tubulaire (4) est inséré dans ledit trou (25) et une fois que ledit dispositif d'espacement (8) a été agencé et que ladite bague (7) a été serrée, entre ledit trou (25) et ledit élément tubulaire (4) par une ouverture respective dudit dispositif d'espacement (8).
